(19) Europäisches Patentamt
European Patent Office
Office européen des brevets

(11) **EP 3 485 952 B1**

(12) **FASCICULE DE BREVET EUROPEEN**

(45) Date de publication et mention de la délivrance du brevet:
**22.07.2020 Bulletin 2020/30**

(21) Numéro de dépôt: **18206822.1**

(22) Date de dépôt: **16.11.2018**

(51) Int Cl.:
**B01D 11/02** (2006.01)  **A23K 10/30** (2016.01)
**A23K 20/111** (2016.01)  **A23K 20/121** (2016.01)
**A23K 20/10** (2016.01)  **A23K 50/75** (2016.01)
**A23K 20/163** (2016.01)

(54) **PROCÉDÉ ÉCOLOGIQUE D'AMÉLIORATION DE LA DISPONIBILITÉ DES SUBSTANCES ACTIVES ISSUES DE MATIÈRES VÉGÉTALES**

ÖKOLOGISCHES VERFAHREN ZUR VERBESSERUNG DER VERFÜGBARKEIT VON AKTIVEN SUBSTANZEN AUS PFLANZENMATERIAL

ECOLOGICAL METHOD FOR IMPROVING THE AVAILABILITY OF ACTIVE SUBSTANCES FROM PLANT MATERIALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2017 FR 1771231**

(43) Date de publication de la demande:
**22.05.2019 Bulletin 2019/21**

(73) Titulaire: **Nor-Feed**
**49070 Beaucouzé (FR)**

(72) Inventeurs:
• **Engler, Paul**
**49140 La Chapelle Saint Laud (FR)**

• **Cissé, Sekhou**
**49100 Angers (FR)**
• **Tessier, Nicolas**
**49370 Bécon-Les-Granits (FR)**
• **Chicoteau, Pierre**
**49240 Avrillé (FR)**

(74) Mandataire: **Bringer, Mathieu**
**BRINGER IP**
**1 Place du Président Thomas Wilson**
**31000 Toulouse (FR)**

(56) Documents cités:
**EP-A2- 2 080 436    WO-A1-97/18283**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte au domaine des procédés d'amélioration de la disponibilité des substances actives, encore appelées molécules d'intérêts, présentes dans les matières premières végétales, plus particulièrement les substances actives utilisées en alimentation animale.

Art antérieur

En alimentation animale, plus d'un millier de plantes sont utilisés pour leurs propriétés fonctionnelles liées à leur composition en molécules actives. A titre d'exemple de ces plantes utilisées en alimentation animale, on peut citer le raisin (*Vitis sp.*), le thé (*Camellia sp.*), le romarin (*Rosmarinus sp.*), la mélisse (*Melissa sp.*), le Quillaja (*Quillaja sp.*) et le Thym (*Thymus sp.*).

L'intérêt des plantes en alimentation animale a déjà été démontré de nombreuses fois au cours de ces dernières décennies. A titre d'exemple, on peut citer le raisin (*Vitis vinifera*), riche en composés phénoliques (proanthocyanidines, anthocyanes), et la mélisse (*Melissa officinalis*) connus pour leurs propriétés antioxydantes (Xia, E.-Q., Deng, G.-F., Guo, Y.-J., Li, H.-B., 2010. Biological Activities of Polyphenols from Grapes. Int J Mol Sci 11, 622-646.; Miraj, S., Rafieian-Kopaei, Kiani, S., 2017. Melissa officinalis L: A Review Study With an Antioxidant Prospective. J Evid Based Complementary Altern Med 22, 385-394). Le raisin est utilisé en alimentation animale pour diverses raisons dont l'amélioration de la qualité de la viande (Engler Paul, Fleury Roselyne, Marcelot Nathalie, Chicoteau Pierre, 2017. « Impacts d'une supplémentation en antioxydants dans l'eau de boisson chez le poulet de chair », JRA2017); l'optimisation de la réussite en reproduction (Eid, Y. Z. 2010. "Dietary Grape Pomace Affects Lipid Peroxidation and Antioxidative Status in Rabbit Semen." World Rabbit Science 16 (3):157-64.) ou encore la stimulation des défenses naturelles.

A titre d'exemple, on peut également citer le romarin (*Rosmarinus officinalis L*) et le thym (*Thymus sp.*) riches en composés phénoliques (acide rosmarinique, acide carnosique) et connus pour leurs propriétés antioxydantes. En 2016, la corrélation entre le taux de composés phénoliques et l'activité antioxydante de divers échantillons de romarin a été clairement mise en évidence (Olah, Neli-Kinga, Gyongyi Osser, Câmpean Ramona Flavia, Flavia Roxana Furtuna, Daniela Benedec, Filip Lorena, Oana Raita, and Daniela Hanganu. 2016. "The Study of Polyphenolic Compounds Profile of Some Rosmarinus Officinalis L. Extracts." Pakistan Journal of Pharmaceutical Sciences 29 (December):2355-61.) Les extraits de romarin (*Rosmarinus officinalis* L.) et de thym (*Thymus sp.*) sont très utilisés en alimentation animale afin de préserver les qualités organoleptiques des aliments pour bétails notamment (Zofia Zaborowska, Krzysztof Przygonski, Agnieszka Bilska, Antioxidative effect of thyme (Thymus vulgaris) in sunflower oil, Acta Sci. Pol., Technol. Aliment. 11(3) 2012, 283-291).

Le thé (*Camellia sp.*) et le quillaja (*Quillaja sp.*) peuvent également être cités en exemple de plantes utilisées en alimentation animale, notamment pour leur teneur élevée en saponines, en particulier pour leurs propriétés anti-protozoaires. Il a été démontré à de nombreuses reprises que la supplémentation en plantes à saponines avait pour conséquence la diminution du nombre de protozoaires dans le rumen, notamment par interaction avec le cholestérol membranaire, lysant ainsi la membrane des protozoaires. (Patra, A. K., and J. Saxena. 2009. "The Effect and Mode of Action of Saponins on the Microbial Populations and Fermentation in the Rumen and Ruminant Production." Nutrition Research Reviews 22 (2):204-19 ; Ramos-Morales, Eva, Gabriel de la Fuente, Stephane Duval, Christof Wehrli, Marc Bouillon, Martina Lahmann, David Preskett, Radek Braganca, and Charles J. Newbold. 2017. "Antiprotozoal Effect of Saponins in the Rumen Can Be Enhanced by Chemical Modifications in Their Structure." Frontiers in Microbiology 8 (March) ; Wina, Elizabeth, Stefan Muetzel, and Klaus Becker. 2005. "The Impact of Saponins or Saponin-Containing Plant Materials on Ruminant Production--a Review." Journal ofAgricultural and Food Chemistry 53 (21):8093-8105 ; Budan Alexandre. 2013. "Caractérisation phytochimique et activités biologiques d'extraits végétaux riches en saponines, Etude in vitro de leur capacité à orienter le métabolisme ruminal." Ecole doctorale VENAM, Université d'Angers).

La concentration et la disponibilité des molécules d'intérêts issues de plantes varient en fonction de la fraction de la plante utilisée. A titre d'exemple, on peut citer le romarin (*Rosmarinus officinalis*) dont la concentration en divers composés actifs, parmi lesquels peuvent être cités l'acide rosmarinique ou encore l'acide carnosique, est plus importante dans les feuilles, comparée à la racine ou encore la fleur (Baño, Maria José del, Juan Lorente, Julian Castillo, Obdulio Benavente-Garcia, José Antonio del Río, Ana Ortuño, Karl-Werner Quirin, and Dieter Gerard. 2003. "Phenolic Diterpenes, Flavones, and Rosmarinic Acid Distribution during the Development of Leaves, Flowers, Stems, and Roots of Rosmarinus Officinalis. Antioxidant Activity." Journal ofAgricultural and Food Chemistry 51 (15):4247-53t al. 2003). Deplus, il existe une variation intra-spécifique liée aux conditions de culture de la plante, résultant également de la variabilité génétique au sein d'une même plante.

De ce fait, de nombreux procédés ont été élaborés afin de garantir une disponibilité des actifs et une standardisation des produits issus de plantes.

En alimentation animale, le recours aux extraits est une démarche qui se développe de plus en plus, avec notamment pour objectif la réduction de l'utilisation des antibiotiques, permettant d'améliorer les qualités nutritives des aliments ou bien d'avoir un effet positif sur les caractéristiques des aliments pour animaux ou des produits d'origine animale, sur les conséquences environnementales de la production animale, sur la production, le rendement ou le bien-être des animaux.

Ces procédés d'extraction sont généralement assez coûteux, très consommateurs en énergie et nécessitent l'utilisation de solvants et/ou de réactifs en quantités importantes, susceptibles d'être dangereux. Certains produits de synthèse préalablement autorisés ont même été interdits par les autorités, pour le danger qu'ils représentent pour les animaux et/ou pour l'humain. A titre d'exemple, on peut citer l'éthoxyquine, extrait chimique de synthèse utilisé en tant qu'antioxydant et suspendu par l'EFSA depuis le 28 juin 2017, interdit du fait de son effet mutagène possible. Ces procédés sont soumis à une réglementation stricte dans le domaine de l'alimentation animale.

De plus, les procédés d'extraction classiques, par macération ou avec d'autres procédés technologiques tels que les traitements par micro-ondes, aboutissent à une double production de déchets : la matière première « épuisée » ainsi que le solvant d'extraction une fois celui-ci séparé de l'extrait sec par évaporation. Ces déchets impliquent des coûts de traitement important pour l'industrie (installations spécifiques, traitement et évacuation des déchets hors site de production). A ce titre, la demande internationale WO 97/18283 décrit un procédé d'extraction de plantes par irradiation au moyen de micro-ondes et en présence d'un solvant absorbant les micro-ondes, suivi d'une séparation des plantes du solvant par un procédé classique de filtration.

Par ailleurs, la demande de brevet EP2080436 A2 vise un procédé de préparation d'un extrait végétal comprenant une étape de contact entre la matière végétale et le solvant, une étape d'extraction des principes actifs et une étape de séchage, l'étape d'extraction étant réalisée sous pression réduite ou sous gaz inerte. De manière privilégiée, le procédé est mis en oeuvre en effectuant une triple macération sous vide dans laquelle de la matière végétale brute est ajoutée dans l'extrait après extraction et avant séchage, ledit extrait correspondant à la matière végétale initiale et au solvant ayant subi l'étape de contact de l'extraction précédente.Le procédé selon la présente invention ne comprend pas une telle étape d'extraction sous pression réduite ou sous gaz inerte.

La demande de brevet WO97/18283 divulgue un procédé d'extraction de plantes au moyen de micro-ondes et utilisant un solvant qui absorbe fortement lesdites micro-ondes et qui est un « solvant cosmétique » directement utilisables dans les produits cosmétiques. Cette demande comprend deux exemples d'extraction de Mélisse : un exemple par décoction et un exemple par irradiation aux micro-ondes. Le solvant utilisé dans ces deux exemples est un mélange de glycérine/eau 90/10, en outre à la fin des traitements, une étape de filtration est mise en œuvre afin de séparer les plantes du solvant.

Il subsiste donc un besoin d'améliorer les qualités nutritives des aliments ou bien d'avoir un effet positif sur les caractéristiques des aliments pour animaux ou des produits d'origine animale, sur les conséquences environnementales de la production animale, sur la production, le rendement ou le bien-être des animaux, sans avoir recours aux extractions classiques, notamment en terme économique, règlementaire et de simplicité.

Les inventeurs de la présente invention ont mis au point un procédé permettant de résoudre en tout ou partie les problématiques évoquées ci-dessus.

Résumé de l'invention L'objet de la protection du brevet est défini par le jeu de revendications.

La présente invention a donc pour objet un procédé d'amélioration de la disponibilité d'au moins une substance active contenue dans une matière première végétale comprenant au moins les étapes suivantes, dans cet ordre :

a) disposer d'au moins une matière première végétale ;
b) réaliser une étape d'imprégnation en mettant ladite matière première végétale en contact avec un solvant dit « solvant polaire d'imprégnation » pendant une période allant de 1 heure à 2 jours à une température allant de 5°C à la température d'ébullition du solvant polaire d'imprégnation, de préférence à pression atmosphérique ;
c) procéder à l'évaporation partielle, de préférence à pression atmosphérique, du solvant polaire d'imprégnation jusqu'à l'obtention d'un produit comprenant de 5 à 50 %, de préférence comprenant de 7 à 30% et de manière préférée de 9 à 20% en poids de solvant d'imprégnation par rapport au poids total du produit,

ledit procédé étant tel que l'étape c) d'évaporation du solvant polaire d'imprégnation est effectuée directement sur l'intégralité du mélange issu de l'étape b) d'imprégnation de la matière première végétale avec le solvant polaire,

ladite matière première végétale étant choisie dans le groupe formé par les Theaceae, les Rosaceae, les Lamiaceae, les Vitaceae, les Fabaceae et les Lauraceae et en particulier *Camellia sp., Quillaja sp, Rosmarinus sp., Melissa sp., Thymus sp.* et *Vitis sp..*

La substance active est choisie dans le groupe formé par les saponines et les composés phénoliques. En particulier, la substance active est l'acide rosmarinique.

Avantageusement, le procédé selon la présente invention permet une amélioration d'au moins 25% de la disponibilité d'une substance active d'une matière première végétale par rapport à la disponibilité de la même substance active de la matière première végétale non traitée par ledit procédé selon l'invention.

Le procédé d'imprégnation selon l'invention diffère des procédés d'extraction classiquement utilisés en alimentation animale, notamment en ce qu'il ne comprend pas d'étape lors de laquelle les substances actives sont séparées de la matière première végétale : en effet l'étape d'évaporation du solvant polaire d'imprégnation est effectuée directement sur l'intégralité du mélange, c'est-à-dire sans la mise en œuvre d'étape intermédiaire de séparation ou d'extraction des substances actives de la matière première végétale.

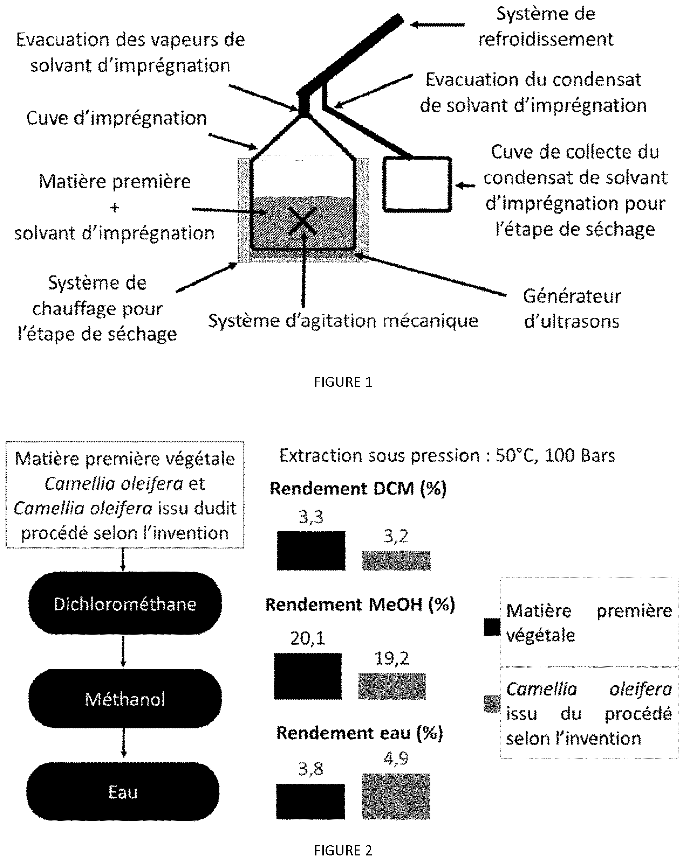

Avantageusement, le procédé selon l'invention n'induit pas de déchets de matière première végétale, celle-ci faisant en effet partie intégrante du produit résultant du procédé selon l'invention. En particulier, au moins une des étapes a), b), c) du procédé selon l'invention, de préférence au moins l'étape c), plus préférentiellement au moins les étapes b) et c) et tout préférentiellement l'ensemble des étapes a), b), c) sont mises en œuvre dans une enceinte fermée de préférence associée à un système de condensation. Avantageusement, ledit système de condensation permet de récupérer les vapeurs de solvant d'imprégnation issues de l'enceinte fermée, le condensat de solvant d'imprégnation étant collecté dans un récipient adapté. Comme dans un mode de réalisation particulier présenté à la figure 1, grâce à une enceinte fermée associée à un système de condensation, le procédé selon l'invention permet également la récupération du solvant d'imprégnation évaporé, pour une réutilisation ultérieure lors d'une autre production. Ainsi, le procédé selon l'invention ne génère pas de déchets de matière première végétale épuisée par extraction, ni de déchets correspondant au solvant d'imprégnation. Il en résulte donc que, très avantageusement, le procédé selon l'invention produit peu, voire pas, de déchets. L'Homme du métier pourra utiliser tout type d'enceinte fermée adaptée au procédé selon l'invention, telle qu'une cuve fermée et tout type de système de condensation adapté au procédé selon l'invention.

On entend par « enceinte fermée » au sens de la présente invention, un récipient dont l'ensemble de ses faces sont fermées au moins lors de l'étape c), de préférence lors des étapes b) et c), et tout préférentiellement lors de l'ensemble des étapes a), b) et c) du procédé selon l'invention. De préférence, l'enceinte fermée est une cuve fermée.

On entend par « système de condensation » au sens de la présente invention, un système collectant les vapeurs de solvants provenant de l'enceinte fermée lors de l'étape c) par un contact entre les vapeurs chaudes et une surface de contact d'une température inférieure. De préférence, le système de condensation comprend un serpentin interne alimenté par un liquide de refroidissement porté à une température allant de 5°C à 20°C.

Les inventeurs ont montré que, de manière surprenante, le produit directement obtenu par le procédé selon l'invention présente une disponibilité améliorée par rapport à la matière première non traitée par le procédé selon l'invention c'est-à-dire une meilleure disponibilité des substances actives au sein des produits issus dudit procédé.

On entend par « disponibilité », l'aptitude de la matière première végétale à libérer *in vitro* et/ou *ex vivo* et/ou *in vivo,* sa ou ses substance(s) active(s).

Au sens de la présente invention, « l'amélioration de la disponibilité des substance(s) active(s) » se traduit par une augmentation de l'activité *in vitro, ex vivo* ou bien *in vivo* des produits issus dudit procédé, comparés à la matière première végétale brute, non traitée.

Le procédé selon l'invention permet une amélioration de la disponibilité des substances actives directement à partir de matières premières végétales, se traduisant par une augmentation de l'activité *in vitro, ex vivo et/ou in vivo* des extraits issus dudit procédé.

Avantageusement, lorsque la matière première végétale est choisie parmi les Theaceae et les Rosaceae et un mélange de celles-ci, en particulier *Camellia oleifera,* ladite au moins une substance active est une saponine, en particulier la totalité des saponines contenues dans ladite matière première végétale.

Ainsi, en particulier, le procédé selon la présente invention est un procédé d'amélioration de la disponibilité des saponines d'une matière première végétale choisie parmi les Theaceae et les Rosaceae et un mélange de celles-ci par rapport à la disponibilité des saponines des Theaceae et Rosaceae et un mélange de celles-ci non traitées.

De manière particulièrement avantageuse, le procédé selon la présente invention est un procédé d'amélioration de la disponibilité des saponines d'une matière première végétale de type *Camellia oleifera* par rapport à la disponibilité des saponines d'une matière première végétale de type *Camellia oleifera* non traitée.

Avantageusement, lorsque la matière première végétale est choisie parmi les Lamiaceae et les Vitaceae et un mélange de celles-ci, en particulier parmi *Melissa sp., Rosmarinus sp., Thymus sp., Vitis sp.* et un mélange de celles-ci, ladite au moins une substance active est un composé phénolique, en particulier la totalité des composés phénoliques contenus dans ladite matière première végétale.

En particulier, le procédé selon la présente invention est un procédé d'amélioration de la disponibilité des composés phénoliques d'une matière première végétale choisie parmi les Lamiaceae et les Vitaceae et un mélange de celles-ci par rapport à la disponibilité des composés phénoliques des Lamiaceae et les Vitaceae et un mélange de celles-ci non traitées.

De manière particulièrement avantageuse, le procédé selon la présente invention est un procédé d'amélioration de la disponibilité des composés phénoliques d'une matière première végétale choisie dans le groupe formé par *Melissa sp., Rosmarinus sp., Thymus sp., Vitis sp.* et un mélange de celles-ci par rapport à la disponibilité des composés phénoliques des *Melissa sp., Rosmarinus sp., Thymus sp., Vitis sp.* et un mélange de celles-ci non traitées.

Avantageusement le composé phénolique est l'acide rosmarinique et la matière première végétale est choisie parmi les Lamiaceae, en particulier parmi *Melissa sp., Thymus sp. et Rosmarinus sp.* et un mélange de celles-ci, tout particulièrement parmi *Melissa sp. et Rosmarinus sp.* et un mélange de celles-ci.

Les matières végétales issues du procédé selon l'invention sont en général moins concentrées en substances actives que les extraits de plantes. Cependant la capacité d'ingestion n'étant pas un facteur limitant chez les animaux d'élevage, une matière première végétale moins concentrée qu'un extrait de plante mais dont la disponibilité des actifs est améliorée est intéressante dans le domaine de l'alimentation animale, notamment au point de vue économique et réglementaire.

Les produits issus du procédé selon l'invention (matières végétales ayant subi le processus d'imprégnation et dont le solvant d'imprégnation a été partiellement évaporé) sont différentes des matières premières et des extraits de plantes.

Le procédé selon l'invention présente en outre les avantages suivants : il ne met pas en œuvre de réactifs délétères pour l'environnement ou pour l'alimentation animale. En particulier il ne met pas en œuvre d'étape d'extraction au moyen de solvants dangereux ou nocifs. Le procédé selon l'invention permet donc avantageusement la fabrication de produits dont la disponibilité des molécules actives est améliorée, tout en ayant un impact environnemental réduit.

Il est simple et économique à mettre en œuvre et, à ce titre, il présente également un faible impact écologique.

D'autres objets, aspects, avantages, propriétés de la présente invention sont présentés dans la description détaillée et les exemples qui suivent.

Description détaillée

**PROCEDES**

*Matière première végétale*

Le procédé selon la présente invention est mis en œuvre à partir d'au moins une matière première végétale comprenant au moins une substance active.

Dans le présent texte, le terme « substance active » vise toute molécule et/ou groupe de molécules d'intérêt présente(s) dans la matière première végétale. Dans la littérature, les expressions « actif », « principe actif », « composé actif » sont également utilisées pour désigner une substance active.

On entend par « substance active », toute molécule disposant d'une activité biologique *in vitro, ex vivo* ou *in vivo* permettant en particulier d'améliorer les qualités nutritives des aliments et/ou bien avoir un effet positif sur les caractéristiques des aliments pour animaux comme par exemple sur la couleur des poissons ou des oiseaux d'ornement, sur les conséquences environnementales de la production animale, sur la production, le rendement ou le bien-être des animaux.

On entend par « matière première végétale » au sens de la présente invention, au moins une plante entière et/ou au moins un élément de la structure d'une plante notamment choisi dans le groupe formé par la racine, la feuille, la tige, l'écorce, la graine, le fruit, la fleur et leurs mélanges. La matière première végétale peut comprendre une ou plusieurs espèces végétales sous forme de plantes entières et/ou sous forme d'éléments de la structure d'une plante.

De préférence, la matière première végétale utilisée dans le procédé selon l'invention est sous forme broyée, de manière préférée sous forme de poudre. Avantageusement la taille des particules de poudre va de 1 à 300 $\mu$m, de préférence de 50 à 250 $\mu$m et tout préférentiellement de 100 à 200 $\mu$m.

Il ressort des compétences de l'homme du métier de définir le procédé de broyage et la taille du broyat en fonction de la matière première végétale choisie, en particulier de la ou des espèces végétales choisies et de la nature de la matière première (plante entière, racine, feuille...).

La matière première végétale utilisée dans le procédé selon l'invention peut être choisie parmi l'ensemble des plantes disposant d'au moins une substance active utilisée en alimentation animale que ce soit dans la ration pour bétails ou bien dans le but d'avoir un effet positif sur les caractéristiques des aliments pour animaux par exemple sur la couleur des poissons ou oiseaux d'ornement, sur les conséquences environnementales de la production animale ; sur la production, le rendement ou le bien-être des animaux.

La matière première végétale utilisée dans le procédé selon l'invention est choisie dans le groupe formé par les Theaceae en particulier *Camellia sp.,* les Rosaceae ou Quillajaceae en particulier *Quillaja sp.,* les Lamiaceae en particulier *Rosmarinus sp., Melissa sp.,* et *Thymus sp.,* les Vitaceae et en particulier *Vitis sp.* les Fabaceae, les Lauraceae et un mélange de celles-ci, tout préférentiellement parmi le groupe formé par les Theaceae en particulier *Camellia sp.,* les Rosaceae ou Quillajaceae en particulier *Quillaja sp.,* les Lamiaceae en particulier *Rosmarinus sp., Melissa sp.,* et *Thymus sp.,* les Vitaceae et en particulier *Vitis sp.* et un mélange de celles-ci et encore plus préférentiellement parmi le groupe formé par les Theaceae en particulier *Camellia sp.,* les Lamiaceae en particulier *Rosmarinus sp., Melissa sp.,* et *Thymus sp.,* les Vitaceae et en particulier *Vitis sp.* et un mélange de celles-ci.

*Solvant polaire*

On entend par « solvant polaire » un solvant présentant un moment dipolaire différent de zéro.

En particulier, le solvant est un solvant protique. Un solvant est dit protique lorsqu'il est susceptible de donner un ion H$^+$ à son environnement.

Dans le procédé selon l'invention, le solvant utilisé est polaire, il est nommé « solvant polaire d'imprégnation ».

Le solvant polaire d'imprégnation est choisi dans le groupe formé par l'eau et les solvants comprenant ou consistant en, en particulier consistant en, de l'eau et au moins un alcool en $C_1$-$C_5$, de préférence le solvant polaire comprend ou consiste en, en particulier consiste en, de l'eau et de 0 à 80% en poids d'un alcool en $C_1$-$C_5$ par rapport au poids total du solvant.

L'eau utilisée peut être choisie parmi l'eau « du robinet », les eaux de source, les eaux thermales, minérales, l'eau osmosée, l'eau milliQ® (Millipore), l'eau distillée, l'eau permutée.

L'eau telle que définie ci-dessus peut être additionnée d'au moins un alcool en $C_1$-$C_5$. De préférence ledit alcool en $C_1$-$C_5$ est choisi parmi le méthanol, l'éthanol, les propanols, les butanols, les pentanols et leurs mélanges en toutes proportions.

De manière particulièrement préférée, le solvant polaire est constitué d'eau et de 0 à 80% en poids d'éthanol par rapport au poids total du solvant.

Selon une deuxième variante, le solvant polaire est choisi dans le groupe formé par les solvants alternatifs composés d'un ou plusieurs agrosolvant(s). Ces agrosolvants peuvent-être additionnés d'eau choisie parmi l'eau « du robinet », les eaux de source, les eaux thermales, minérales, l'eau osmosée, l'eau milliQ® (Millipore), l'eau distillée, l'eau permutée.

On entend par « agrosolvant », tout solvant autre que les solvants pétrochimiques, ayant la propriété de dissoudre, de diluer ou d'extraire d'autres substances sans les modifier chimiquement et sans lui-même se modifier.

En particulier, les solvants alternatifs sont issus de sources renouvelables. A titre d'exemple, on peut citer certains solvants protiques tels que les solvants terpéniques, les esters méthyliques d'acide gras, le glycérol.

*Etape d'imprégnation*

Par « étape d'imprégnation » au sens de la présente invention, on entend une étape dans laquelle la matière première végétale est soumise à un contact prolongé avec le solvant dit « d'imprégnation » de manière à faire pénétrer ledit solvant dans ladite matière première végétale.

Par « imprégnat » au sens de la présente invention, on entend le produit issu de l'étape d'imprégnation, composé de la matière végétale (matière sèche) et du solvant d'imprégnation.

Suivant le procédé selon l'invention, la matière première végétale est mise en contact, imprégnée, avec le solvant polaire d'imprégnation lors de l'étape b) pendant une période allant de 1 heure à 2 jours, en particulier de 18 heures à 30 heures, tout particulièrement de 22 heures à 26 heures et encore plus particulièrement 24 heures, à une température allant de 5°C à la température d'ébullition du solvant polaire d'imprégnation, en particulier de 18°C à 45°C, tout particulièrement de 25°C à 40°C, de préférence à pression atmosphérique.

Lorsque l'étape b) d'imprégnation est effectuée en présence d'ultrasons, de manière continue ou discontinue, sa durée peut être réduite.

Généralement, la quantité de solvant polaire va de 10% à 90% en poids par rapport au poids total du mélange constitué du solvant et de la matière première végétale.

Plus particulièrement, au moins une partie de cette étape b) d'imprégnation, tout particulièrement cette étape b) d'imprégnation est une étape choisie dans le groupe formé par les décoctions, les macérations, les infusions.

Par « décoction » au sens de la présente demande on entend une méthode d'extraction des substances actives d'une matière première végétale par dissolution desdites substances actives dans un solvant porté à ébullition. Les décoctions s'appliquent plus particulièrement aux parties les plus dures des plantes : racines, graines, écorce, bois.

Au sens de la présente demande, on entend par « température d'ébullition du solvant », la température la plus élevée que le solvant peut atteindre avant de s'évaporer, sous forme de gaz, librement. Cette température se calcule à la pression atmosphérique de 101, 3 kPa.

Par « macération » au sens de la présente demande on entend une méthode d'extraction des substances actives d'une matière première végétale par dissolution desdites substances actives à froid dans un solvant.

Par « infusion » au sens de la présente demande on entend une méthode d'extraction des substances actives d'une matière première végétale par dissolution dans un liquide initialement bouillant que l'on laisse refroidir.

Selon une première variante, l'étape d'imprégnation avec un solvant polaire est une étape de décoction dans laquelle la matière première végétale est placée dans le solvant polaire d'imprégnation et le mélange est porté à ébullition pendant une période allant de 1 à 2 heures.

Généralement, lors de l'étape de décoction, la quantité de solvant polaire d'imprégnation va de 10% à 90% en poids par rapport au poids total du mélange constitué du solvant et de la matière première végétale.

Selon une deuxième variante, l'étape d'imprégnation avec un solvant polaire est une étape de macération dans laquelle la matière première végétale est placée dans un solvant polaire d'imprégnation et le mélange est laissé à une température allant de 5 à 45°C, de préférence allant de 15 à 25°C et de manière encore préférée à la température ambiante, pendant une période allant de 1 à 48 heures.

Généralement, lors de l'étape de macération, la quantité de solvant polaire d'imprégnation va de 10% à 90% en poids par rapport au poids total du mélange constitué du solvant et de la matière première végétale.

Selon une troisième variante, l'étape d'imprégnation avec un solvant polaire est une étape d'infusion dans laquelle au moins un solvant polaire d'imprégnation est versé sur la matière première végétale, ledit solvant polaire d'imprégnation étant à température d'ébullition, puis le mélange est laissé refroidir pendant une période allant de 1 à 2h.

Généralement, lors de l'étape d'infusion, la quantité de solvant polaire d'imprégnation va de 10% à 90% en poids par rapport au poids total du mélange constitué du solvant et de la matière première végétale.

Avantageusement, au moins une partie de l'étape b), en particulier la totalité de l'étape b) d'imprégnation de la matière première végétale avec le solvant polaire d'imprégnation est effectuée en tout ou partie en présence d'ultrasons, de manière continue ou discontinue.

Lorsque l'étape d'imprégnation de la matière première végétale avec le solvant polaire est effectuée en présence d'ultrasons, ladite étape d'imprégnation est de préférence une macération.

Ainsi selon une variante préférée, l'étape d'imprégnation de la matière première végétale avec le solvant polaire est une macération de préférence effectuée en tout ou partie en présence d'ultrasons .

Avantageusement, au moins une partie de l'étape b), en particulier l'étape b) d'imprégnation de la matière première végétale avec le solvant polaire d'imprégnation est une étape de macération de la matière première végétale avec un solvant polaire d'imprégnation comprenant ou consistant en, de préférence consistant en de l'eau et de 5 à 80% en poids d'éthanol par rapport au poids total du solvant, de préférence ladite étape de macération étant effectuée en tout ou partie en présence d'ultrasons.

Par « effectuée en présence d'ultrasons », on entend que le mélange de matière première végétale et solvant polaire est soumis à des ultrasons pendant une période (continue ou discontinue) allant de deux minutes à deux heures, dans une gamme de puissances allant de 1 à 1000 watts.

Cette période pouvant être continue, ou discontinue, i.e. interrompue par des temps de pause allant de préférence de 1 minute à 1 heure.

En outre plusieurs périodes (continues ou discontinues) d'application d'ultrasons peuvent être effectuées, interrompues par des temps de pause allant de préférence de 1 heure à 48 heures.

L'étape d'imprégnation de la matière première végétale avec le solvant polaire peut ainsi être mise en œuvre en continu ou en discontinu.

L'étape d'imprégnation de la matière première végétale avec le solvant polaire, en particulier l'étape de macération, peut être effectuée en présence d'un agent de digestion choisi parmi les acides et les enzymes.

*Evaporation du solvant d'imprégnation*

Le procédé selon la présente invention comprend une étape lors de laquelle on procède à l'évaporation du solvant polaire d'imprégnation, de préférence à pression atmosphérique, jusqu'à l'obtention d'un produit comprenant de 5 à 50 %, de préférence comprenant de 7 à 30% et de manière préférée de 9 à 20% en poids de solvant par rapport au poids total du produit.

Ladite étape c) d'évaporation du solvant polaire d'imprégnation est effectuée directement sur l'intégralité du mélange issu de l'étape b) d'imprégnation de la matière première végétale avec le solvant polaire d'imprégnation c'est-à-dire que le procédé selon l'invention ne comprend avantageusement pas d'étape de séparation ou d'extraction des substances actives. L'étape d'évaporation du solvant d'imprégnation peut être mise en œuvre par chauffage à une température allant de 20°C à 150°C, pendant une période allant de 1 minute à 96 heures.

Comme présenté dans le mode de réalisation particulier de la figure 1, le chauffage dans le procédé selon l'invention est avantageusement effectué dans une enceinte fermée en présence d'un système de condensation. Dans ce cas, les vapeurs de solvant d'imprégnation issues de l'enceinte sont dirigées dans un système de condensation et le condensat de solvant d'imprégnation est alors collecté dans un récipient adapté. Avantageusement, le condensat de solvant d'imprégnation collecté peut être utilisé par la suite pour une nouvelle réalisation du procédé selon l'invention. De manière très avantageuse, le procédé selon l'invention n'induit donc pas de déchet de solvants d'imprégnation.

Selon un mode réalisation du procédé selon l'invention, l'étape d'évaporation du solvant d'imprégnation peut être réalisée avec ou sans agitation.

Selon un mode de réalisation du procédé selon l'invention, l'étape d'évaporation du solvant d'imprégnation peut être réalisée à température ambiante ou par chauffage, en particulier de 20 à 90°C.

Selon un mode de réalisation du procédé selon l'invention, l'étape d'évaporation du solvant d'imprégnation peut être réalisée en continu ou en discontinu.

Selon un mode de réalisation du procédé selon l'invention, la température de chauffage pour parvenir à l'évaporation du solvant d'imprégnation peut être modulée pendant la durée de chauffage.

Selon une variante préférée, l'étape d'évaporation du solvant d'imprégnation comprend le chauffage du mélange issu de l'étape b) à une température allant de 20 à 80°C sous agitation jusqu'à l'obtention d'un produit comprenant de 30 à 50 % en poids de solvant d'imprégnation par rapport au poids total du produit puis le séchage partiel du produit à une température allant de 60 à 90°C jusqu'à l'obtention d'un produit comprenant de 5 à 20% en poids de solvant d'imprégnation par rapport au poids total du produit.

Avantageusement, dans le procédé selon l'invention, l'étape b) d'imprégnation et/ou l'étape c) d'évaporation est réalisée à pression atmosphérique, de préférence l'étape b) d'imprégnation et l'étape c) d'évaporation sont réalisées à pression atmosphérique.

Les exemples qui suivent visent à illustrer l'invention sans en limiter la portée.

## EXEMPLES

### Exemple 1 : Amélioration de la disponibilité des saponines d'une poudre de *Camellia oleifera*

Préparation du produit

Imprégnation avec le solvant polaire d'imprégnation

1kg de poudre de matière première végétale *Camellia oleifera* est placé dans un récipient de 10 litres. 5 litres de mélange eau/éthanol dans un rapport pondéral 70/30 sont ajoutés à la poudre de matière première végétale puis le tout est soumis à imprégnation durant une période de 24h, sous agitation continue, à température ambiante (25°C). L'agitation fut la même pour tous les échantillons.

Evaporation du solvant d'imprégnation

Après 24h d'imprégnation, l'imprégnat est chauffé à une température 70°C, sous agitation continue. Le chauffage et l'agitation sont stoppés lorsque l'imprégnat atteint 50% poids de matière sèche.

L'imprégnat obtenu est ensuite séché à la température de 80°C, jusqu'à atteindre une matière sèche de 90% poids.

Deux échantillons, identifiés échantillon 1 et échantillon 2 ont été préparés.

Détermination de l'amélioration de la disponibilité

Les saponines sont des molécules tensioactives qui produisent naturellement de la mousse lorsqu'elles sont en solution, la quantité de mousse produite est proportionnelle à la quantité de saponines disponibles.

L'amélioration de la disponibilité des saponines a été déterminée *via* la mesure du pouvoir moussant, selon un protocole adapté de la méthode décrite par Ross et Miles (Ross, John, and Gilbert De Wayas Miles. 1943. Method and apparatus for foam détermination. US2315983 (A), issued April 6, 1943.)

Les résultats sont exprimés en cm de mousse par gramme de matière sèche.

Les échantillons 1 et 2 ont été comparés à la matière première végétale d'origine. Chaque mesure a été réalisée en n= 5, une analyse de la variance a été réalisée via le logiciel GraphPad Prism® afin de juger de la significativité des résultats. Ceux-ci sont présentés dans le tableau 1 ci-après.

Tableau 1: tableau récapitulatif des valeurs obtenues par mesure du pouvoir moussant sur différents échantillons de *Camellia oleifera*

| | Matière première végétale n'ayant pas subit le procédé selon l'invention (comparatif) | échantillon 1 conforme à l'invention | échantillon 2 conforme à l'invention |
|---|---|---|---|
| % matière sèche | 91,10% | 89,80% | 88,80% |
| Analyse 1 (cm/g de matière sèche) | 3,3 | 11,1 | 13,4 |
| Analyse 2 (cm/g de matière sèche) | 3,7 | 11,6 | 11,6 |

(suite)

|  | Matière première végétale n'ayant pas subit le procédé selon l'invention (comparatif) | échantillon 1 conforme à l'invention | échantillon 2 conforme à l'invention |
|---|---|---|---|
| Analyse 3 (cm/g de matière sèche) | 4,6 | 12,9 | 13,1 |
| Analyse 4 (cm/g de matière sèche) | 4,2 | 13,4 | 12,5 |
| Analyse 5 (cm/g de matière sèche) | 3,7 | 11,6 | 13,1 |
| moyenne | **3,9** | **12,1** | **12,7** |
| écart type | 0,5 | 0,9 | 0,7 |

Ces résultats montrent que les échantillons issus du procédé selon l'invention présentent une activité *in vitro* significativement améliorée (+210%) par rapport à la matière première d'origine.

Détermination de la quantité des molécules présentes

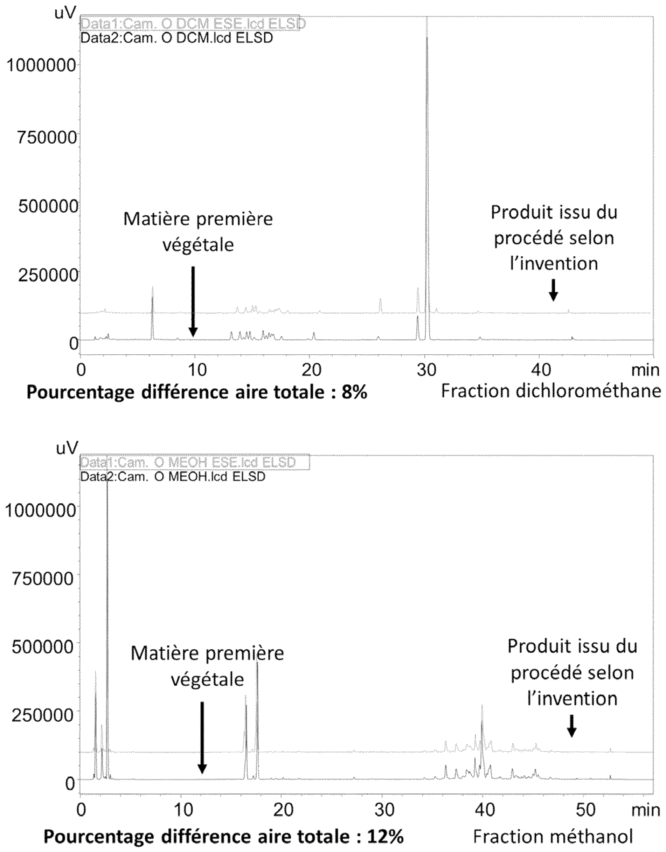

Quantité de molécules actives présentes dans la matière première non traitée et dans le produit issu du procédé selon l'invention :
Le profil chimique d'un échantillon issu du procédé selon l'invention a été réalisé par HPLC/DEDL et comparé à un échantillon de matière première végétale.
3 extractions successives au dichlorométhane, au méthanol et à l'eau ont été effectuées sur un échantillon de matière première végétale *Camellia oleifera* et sur un échantillon de *Camellia oleifera* issu du procédé selon l'invention.
Cette méthode d'extraction épuisement (50°C-100 bars) permet de récupérer l'ensemble des molécules présentes dans les échantillons testés. Les rendements d'extraction obtenus par cette méthode sont présentés dans la figure 2.
La figure 2 présente les rendements d'extraction de l'échantillon de matière première végétale (en noir) et de l'échantillon de *Camellia oleifera* issu du procédé selon l'invention (en gris).
Le premier graphique (en haut) correspond à la fraction extraite au dichlorométhane, le deuxième graphique (au milieu) correspond à la fraction extraite au méthanol et le troisième graphique (en bas) correspond à la fraction extraite à l'eau.
Les résultats ne montrent aucune différence significative entre le rendement de l'échantillon de matière première végétale et l'échantillon de produit issu du procédé selon l'invention.

Profils HPLC

Les profils HPLC des différentes fractions (Dichlorométhane (DCM), méthanol, eau) de l'échantillon de matière première végétale et l'échantillon de produit issu du procédé selon l'invention ont été réalisés.

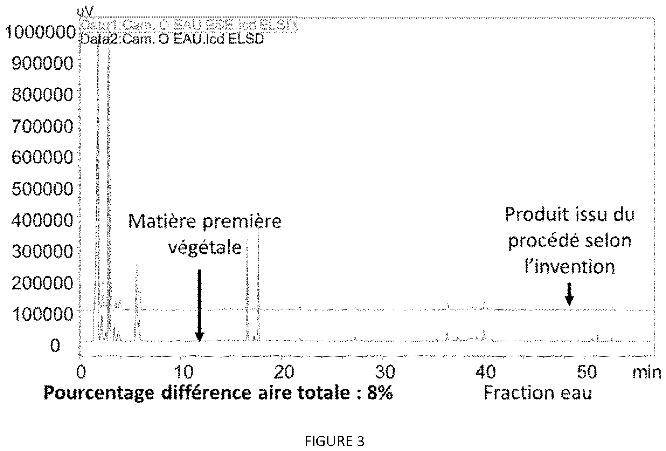

La figure 3 présente ces différentes fractions.
Le premier graphique correspond au profil réalisé avec le dichlorométhane comme éluant, le deuxième graphique correspond au profil réalisé avec le méthanol comme éluant et le troisième graphique correspond au profil réalisé avec l'eau comme éluant.
Sur chaque graphique de la figure 3, le profil de l'échantillon de matière première végétale est représenté en noir et celui de l'échantillon de produit issu du procédé selon l'invention est représenté en gris et est noté « produit issu du procédé selon l'invention ».
L'aire totale des profils des échantillons de produit issu du procédé selon l'invention est quasiment toujours similaire à celle des profils des échantillons de matière première végétale, le pourcentage de différence de l'aire totale est de 8 % pour le profil réalisé avec l'eau comme éluant, 8 % pour le profil réalisé avec le dichlorométhane comme éluant et 12 % pour le profil réalisé avec le méthanol comme éluant.
L'analyse HPLC démontre que la mise en œuvre du procédé selon l'invention sur une matière première végétale de *Camellia oleifera* n'entraîne aucune dégradation sur le produit fini issus dudit procédé selon l'invention.
En outre, au vu des rendements d'extraction des différentes fractions ainsi que des profils HPLC, il n'y a aucune différence notable de composition et de quantité entre la matière première végétale *Camellia oleifera* et le produit de *Camellia oleifera* obtenu par le procédé selon l'invention.

Dans la mesure où les résultats relatifs à la quantité de mousse ont montré une meilleure activité du produit de *Camellia oleifera* issu du procédé selon l'invention comparé à la matière première végétale *Camellia oleifera,* cette augmentation de l'activité est donc due à une meilleure disponibilité des saponines de *Camellia oleifera* du produit issu du procédé selon l'invention, sans modification de la composition de l'échantillon par rapport à la matière première végétale *Camellia oleifera.*

**Exemple 2** : **Amélioration de la disponibilité des composés phénoliques d'une poudre de *Melissa officinalis***

Préparation du produit

Imprégnation avec le solvant polaire d'imprégnation

50 g de poudre de matière première végétale de *Melissa officinalis* (feuille) sont placés dans un récipient de 5 litres. 250 millilitres de mélange eau/éthanol dans un rapport pondéral (54/46) sont ajoutés à la poudre de matière première végétale puis le tout est soumis à imprégnation durant une période de 24h, sous agitation continue, à température de 40°C.

Evaporation du solvant d'imprégnation

L'imprégnat est chauffé à une température 70°C, sous agitation continue. Le chauffage et l'agitation sont stoppés lorsque l'imprégnat atteint 80% poids de matière sèche.

L'imprégnat est ensuite séché à une température de 70°C sans agitation. Le séchage est stoppé lorsque le produit atteint 90% poids de matière sèche.

L'amélioration de la disponibilité de l'acide rosmarinique a été déterminée selon un protocole adapté de la méthode décrite dans Monographie de la feuille de mélisse de la Pharmacopée Européenne (Ph. Eur. 6.0, 1184 (01/2008).

Les résultats des mesures d'acide rosmarinique dans les échantillons ayant subi ou non le procédé selon l'invention sont indiqués dans le tableau ci-dessous.

Tableau 2: tableau récapitulatif des valeurs obtenues par mesure de l'acide rosmarinique sur des échantillons de *Melissa officinalis* ayant ou non subit le procédé selon l'invention

| | Matière première végétale n'ayant pas subit le procédé selon l'invention (comparatif) | Echantillon conforme à l'invention |
|---|---|---|
| % matière sèche | 100% | 97.22% |
| Analyse 1 (mg acide rosmarinique/ 100g de matière sèche) | 2.4 | 4.0 |
| Analyse 2 (mg acide rosmarinique/ 100g de matière sèche) | 1.9 | 3.6 |
| moyenne | **2.2** | **3.8** |
| écart type | 0.4 | 0.3 |

Les résultats obtenus présentent une forte augmentation du pourcentage d'acide rosmarinique (+72%) par rapport à la matière première végétale.

Dans la mesure où la matière première végétale est identique, on en déduit que le procédé selon la présente invention permet une augmentation de la disponibilité de l'acide rosmarinique.

**Exemple 3 : Amélioration de la disponibilité des composés phénoliques d'une poudre de *Thymus vulgaris***

Préparation du produit

Imprégnation avec le solvant polaire d'imprégnation

50 g de poudre de matière première végétale de *Thymus vulgaris* sont placés dans un récipient de 5 litres. 250 millilitres de mélange eau/éthanol dans un rapport pondéral (54/46) sont ajoutés à la poudre de matière première végétale puis le tout est soumis à imprégnation durant une période de 24h, sous agitation continue, à température de 40°C.

Evaporation du solvant d'imprégnation

L'imprégnat est chauffé à une température 70°C, sous agitation continue. Le chauffage et l'agitation sont stoppés lorsque l'imprégnat atteint 80% poids de matière sèche.
L'imprégnat est ensuite séché à une température de 70°C sans agitation. Le séchage est stoppé lorsque le produit atteint 90% poids de matière sèche.
La détermination des pourcentages des composés phénoliques est effectuée selon le protocole présenté ci-dessous.

Détermination des pourcentages de composés phénoliques

Les polyphénols possèdent tous une propriété d'absorbance à 280 nm.
Le pourcentage de composés phénoliques du produit obtenu par le procédé selon l'invention a été mesuré et comparé à la matière première végétale n'ayant pas subit le procédé selon l'invention, selon un protocole adapté du règlement européen (EFSA.2017. Safety and efficacy of dry grape extract when used as a feed flavouring for all animal species and categories. Scientific opinion, 10.2903/j.efsa.2016.4476).
Selon ce protocole, le dosage des polyphénols a été effectué en préparant des solutions aqueuses de poudre de matière sèche (matière première sèche pour l'échantillon comparatif et produit obtenu par le procédé selon l'invention) puis à effectuer des mesures d'absorbance à 280 nm. (RIBEREAU-GAYON P., 1970. Le dosage des composés phénoliques totaux dans les vins rouges. Chimie Analytique, 52, 6, 627-631).
La concentration de la poudre en polyphénols totaux (Cp) est ensuite déterminée à l'aide d'une courbe de référence établie avec la catéchine et en appliquant la formule suivante :

*Cp = ((Absorbance mesurée/coefficient directeur de la courbe étalon)\*facteur de dilution\*(Masse théorique du produit/Masse réellement pesée)\*% de pureté de la catéchine étalon\* % de catéchine non hydratée)/100.*

L'augmentation du pourcentage de composés phénoliques est présentée dans le ci-dessous.

Tableau 3: tableau récapitulatif des valeurs obtenues par mesure des composés phénoliques sur des échantillons de *Thymus vulgaris* ayant ou non subit le procédé selon l'invention

|  | Matière première végétale n'ayant pas subit le procédé selon l'invention (comparatif) | Echantillon conforme à l'invention |
|---|---|---|
| % matière sèche | 100% | 96.07% |
| Analyse 1 (mg composés phénoliques/ 100g de matière sèche) | 2.56 | 3.65 |
| Analyse 2 (mg composés phénoliques / 100g de matière sèche) | 2.47 | 3.10 |
| moyenne | **2.52** | **3.38** |
| écart type | 0.06 | 0.39 |

**EP 3 485 952 B1**

Les résultats obtenus présentent une forte augmentation du pourcentage de composés phénoliques (+34%) par rapport à la matière première végétale.

Dans la mesure où la matière première végétale est identique, on en déduit que le procédé selon la présente invention permet une augmentation de la disponibilité des composés phénoliques.

**Exemple 4 : Amélioration de la disponibilité des composés phénoliques d'une poudre de *Vitis vinifera***

Préparation du produit

Imprégnation avec le solvant polaire d'imprégnation

50 g de poudre de matière première végétale de *Vitis vinifera* sont placés dans un récipient de 5 litres. 250 millilitres de mélange eau/éthanol dans un rapport pondéral (54/46) sont ajoutés à la poudre de matière première végétale puis le tout est soumis à imprégnation durant une période de 24h, sous agitation continue, à température de 40°C.

Evaporation du solvant d'imprégnation

L'imprégnat est chauffé à une température 70°C, sous agitation continue. Le chauffage et l'agitation sont stoppés lorsque l'imprégnat atteint 80% poids de matière sèche.

L'imprégnat est ensuite séché à une température de 70°C sans agitation. Le séchage est stoppé lorsque le produit atteint 90% poids de matière sèche.

La détermination des pourcentages des composés phénoliques est effectuée selon le protocole présenté à l'exemple 3.

L'augmentation du pourcentage de composés phénoliques est présentée dans le ci-dessous.

Tableau 4: tableau récapitulatif des valeurs obtenues par mesure des composés phénoliques sur des échantillons de *Vitis vinifera* ayant ou non subit le procédé selon l'invention

| | % matière sèche | Composés phénoliques (mg composés phénoliques/ 100g de matière sèche) | Comparatif matière première non traitée |
|---|---|---|---|
| Matière première végétale n'ayant pas subit le procédé selon l'invention (comparatif) | 89.6% | 0.25 | |
| Echantillon 1 conforme à l'invention | 87.0% | 1.28 | x5.1 |
| Echantillon 2 conforme à l'invention | 90.3% | 1.93 | x7.7 |

Les résultats obtenus présentent une forte augmentation du pourcentage (+400%) de composés phénoliques par rapport à la matière première végétale.

Dans la mesure où la matière première végétale est identique, on en déduit que le procédé selon la présente invention permet une augmentation de la disponibilité des composés phénoliques.

**Exemple 5: Formulation d'un aliment pour poules pondeuses contenant un élément issu du procédé selon l'invention.**

On prépare 1 kg d'un aliment pour poule pondeuse en mélangeant :

350 g de blé,

170 g de maïs,

120 g de soja génétiquement modifié,

110 g de carbonate de calcium,

90 g de drèches de distillerie de maïs,

50 g tourteau de tournesol partiellement décortiqué,

1 g de *Vitis vinifera,* échantillon du produit obtenu dans l'exemple 4 par la mise en œuvre du procédé selon l'invention

Complément à 1kg avec protéine de luzerne, phosphate monocalcique et huile de palme.

Caractéristiques de cet aliment :

Vit A 10000 UI/kg
vit D3 1500 UI/kg
vit E 13 Mg/kg

Acide aminés et analogue :

Analogue hydroxylé de la méthionine 0.05 %
Oligo éléments : Cuivre 15 mg /kg

Constituant analytique :

Protéine brute 15.5 %
Matières grasses brutes 3.4 %
Cellulose 4.3 %
Cendres brutes 12.6 %
Méthionine 0.26 %

## Revendications

1. Procédé d'amélioration de la disponibilité d'au moins une substance active contenue dans une matière première végétale **caractérisé en ce qu'**il comprend au moins les étapes suivantes, dans cet ordre :

   a) disposer d'au moins une matière première végétale ;
   b) réaliser une étape d'imprégnation en mettant ladite matière première végétale en contact avec un solvant polaire d'imprégnation pendant une période allant de 1 heure à 2 jours à une température allant de 5°C à la température d'ébullition du solvant polaire d'imprégnation, ledit solvant polaire d'imprégnation étant choisi dans le groupe formé par l'eau et les solvants comprenant ou consistant en de l'eau et au moins un alcool en $C_1$-$C_5$;
   c) procéder à l'évaporation partielle du solvant polaire d'imprégnation jusqu'à l'obtention d'un produit comprenant de 5 à 50 %, en poids de solvant d'imprégnation par rapport au poids total du produit ;

   ledit procédé étant tel que l'étape c) d'évaporation du solvant polaire d'imprégnation est effectuée directement sur l'intégralité du mélange issu de l'étape b) d'imprégnation de la matière première végétale avec le solvant polaire ; ladite matière première végétale étant choisie dans le groupe formé par les Theaceae, les Rosaceae, les Lamiaceae, les Vitaceae, les Fabaceae et les Lauraceae et en particulier *Camellia sp., Quillaja sp, Rosmarinus sp., Melissa sp., Thymus sp.,.et Vitis sp.,* de préférence ladite matière première végétale étant sous forme broyée, plus préférentiellement sous forme de poudre,
   ladite substance active étant choisie dans le groupe formé par les saponines et les composés phénoliques.

2. Procédé selon la revendication 1 dans lequel l'étape b) d'imprégnation et/ou l'étape c) d'évaporation est réalisée à pression atmosphérique.

3. Procédé selon la revendication 2 dans lequel l'étape b) d'imprégnation et l'étape c) d'évaporation sont réalisées à pression atmosphérique.

4. Procédé selon l'une quelconque des revendications 1 à 3 dans lequel au moins une partie de l'étape b) d'imprégnation de la matière première végétale avec le solvant polaire d'imprégnation est une étape choisie dans le groupe formé par les décoctions, les macérations et les infusions.

5. Procédé selon l'une quelconque des revendications 1 à 4, dans lequel au moins une partie de l'étape b) d'imprégnation de la matière première végétale avec le solvant polaire d'imprégnation est effectuée en présence d'ultrasons.

**6.** Procédé selon l'une quelconque des revendications 1 à 5 dans lequel le solvant polaire d'imprégnation comprend ou consiste en de l'eau et de 0 à 80% en poids d'éthanol par rapport au poids total du solvant.

**7.** Procédé selon l'une quelconque des revendications 1 à 6 dans lequel au moins une partie de l'étape b) d'imprégnation de la matière première végétale avec le solvant polaire d'imprégnation est une étape de macération de la matière première végétale avec un solvant polaire d'imprégnation comprenant ou consistant en de l'eau et de 5 à 80% en poids d'éthanol par rapport au poids total du solvant, de préférence au moins une partie de ladite étape de macération étant effectuée en présence d'ultrasons.

**8.** Procédé selon l'une quelconque des revendications 1 à 7 **caractérisé en ce qu'**il s'agit d'un procédé d'amélioration de la disponibilité des saponines d'une matière première végétale choisie parmi les Theaceae et les Rosaceae par rapport à la disponibilité des saponines des Theaceae et Rosaceae non traitées.

**9.** Procédé selon la revendication 8 **caractérisé en ce qu'**il s'agit d'un procédé d'amélioration de la disponibilité des saponines d'une matière première végétale de type *Camellia oleifera* par rapport à la disponibilité des saponines d'une matière première végétale de type *Camellia oleifera* non traitée.

**10.** Procédé selon l'une quelconque des revendications 1 à 7 **caractérisé en ce qu'**il s'agit d'un procédé d'amélioration de la disponibilité des composés phénoliques d'une matière première végétale choisie parmi les Lamiaceae et les Vitaceae par rapport à la disponibilité des composés phénoliques des Lamiaceae et les Vitaceae non traitées.

**11.** Procédé selon la revendication 10 **caractérisé en ce qu'**il s'agit d'un procédé d'amélioration de la disponibilité des composés phénoliques d'une matière première végétale choisie dans le groupe formé par *Melissa sp., Rosmarinus sp., Thymus sp.* et *Vitis sp.* par rapport à la disponibilité des composés phénoliques des *Melissa sp., Rosmarinus sp., Thymus sp.* et *Vitis* sp. non traitées.

**12.** Procédé selon l'une quelconque des revendications 1 à 11 dans lequel au moins l'étape c), en particulier au moins les étapes b) et c) et tout particulièrement l'ensemble des étapes a), b), c), est mise en œuvre dans une enceinte fermée, de préférence associée à un système de condensation.

**Patentansprüche**

**1.** Verfahren zur Steigerung der Verfügbarkeit mindestens einer in einem Pflanzen-Rohmaterial enthaltenen aktiven Substanz, **dadurch gekennzeichnet, dass** es mindestens die folgenden Schritte in dieser Reihenfolge umfasst:

a) Bereitstellen mindestens eines Pflanzen-Rohmaterials;
b) Durchführen eines Imprägnierungsschritt durch Inkontaktbringen des Pflanzen-Rohmaterials mit einem polaren Imprägnierungsmittel für eine Zeitspanne im Bereich von 1 Stunde bis 2 Tagen bei einer Temperatur im Bereich von 5 °C bis zum Siedepunkt des polaren Imprägnierungsmittels; worin das polare Imprägnierungsmittel ausgewählt ist aus der Gruppe aus Wasser und dem Lösungsmittel, welches umfasst oder besteht aus Wasser und mindestens einem $C_1$-$C_5$ Alkohol;
c) Fortfahren mit teilweise Verdampfen des polaren Imprägnierungsmittels, bis ein Produkt erhalten wird, das von 5 bis 50 Gew.-% des Imprägnierungsmittels in Bezug zu dem Gesamtgewicht des erhaltenen Produkts umfasst;

wobei das Verfahren derart ist, dass Schritt c), Verdampfen des polaren Imprägnierungsmittels, direkt an dem gesamten Gemisch von Schritt b), Imprägnieren des Pflanzen-Rohmaterials mit dem polaren Lösungsmittel, durchgeführt wird;
wobei das Pflanzen-Rohmaterial ausgewählt ist aus der Gruppe bestehend aus *Theaceae, Rosaceae, Lamiaceae, Vitaceae, Fabaceae and Lauraceae* und insbesondere *Camellia sp., Quillaja sp, Rosmarinus sp., Melissa sp., Thymus sp.,* und *Vitis sp.,* vorzugsweise wobei das Pflanzen-Rohmaterial in vermahlener Form vorliegt, mehr bevorzugt in Pulverform;
wobei die aktive Substanz ausgewählt ist aus der Gruppe bestehend aus Saponinen und Phenolverbindungen.

**2.** Verfahren nach Anspruch 1, wobei der Imprägnierungsschritt b) und/oder der Verdampfungsschritt c) bei Umgebungsdruck durchgeführt wird.

**14**

3. Verfahren nach Anspruch 2, wobei der Imprägnierungsschritt b) und der Verdampfungsschritt c) bei Umgebungsdruck durchgeführt werden.

4. Verfahren nach einem der Ansprüche 1 bis 3, wobei mindestens ein Teil von Schritt b), Imprägnieren des Pflanzen-Rohmaterials mit dem polaren Imprägnierungsmittel, ein Schritt ist ausgewählt aus der Gruppe bestehend aus Abkochen, Mazerierung und Infusionen.

5. Verfahren nach einem der Ansprüche 1 bis 4, wobei mindestens ein Teil von Schritt b), Imprägnieren des Pflanzen-Rohmaterials mit dem polaren Imprägnierungsmittel in Anwesenheit von Ultraschall durchgeführt wird.

6. Verfahren nach einem der Ansprüche 1 bis 5, wobei das polare Imprägnierungsmittel Wasser ist oder dieses umfasst, und von 0 bis 80 Gew.-% Ethanol basierend auf dem Gesamtgewicht des Lösungsmittels.

7. Verfahren nach einem der Ansprüche 1 bis 6, wobei mindestens ein Teil von Schritt b), Imprägnieren des Pflanzen-Rohmaterials mit dem polaren Imprägnierungsmittel, ein Schritt des Mazerierens des Pflanzen-Rohmaterials mit einem polaren Imprägnierungsmittel ist, welches Wasser ist oder dieses umfasst und von 5 bis 80% Gew.-% Ethanol basierend auf dem Gesamtgewicht des Lösungsmittels, vorzugsweise wobei mindestens ein Teil des Mazerierungsschrittes in Anwesenheit von Ultraschall durchgeführt wird.

8. Verfahren nach einem der Ansprüche 1 bis 7, **dadurch gekennzeichnet, dass** es ein Verfahren zur Steigerung der Verfügbarkeit von Saponinen eines Pflanzen-Rohmaterials ausgewählt unter *Theaceae* und *Rosaceae* ist relativ zu der Verfügbarkeit von Saponinen unbehandelter *Theaceae* und *Rosaceae.*

9. Verfahren nach Anspruch 8 **dadurch gekennzeichnet, dass** es ein Verfahren zur Steigerung der Verfügbarkeit von Saponinen eines Pflanzen-Rohmaterials des *Camellia oleifera* Typs ist relativ zu der Verfügbarkeit von Saponinen eines Pflanzen-Rohmaterial eines unbehandelten Pflanzen-Rohmaterial des *Camellia oleifera* Typs.

10. Verfahren nach einem der Ansprüche 1 bis 7, **dadurch gekennzeichnet, dass** es ein Verfahren zur Steigerung der Verfügbarkeit phenolischer Verbindungen eines Pflanzen-Rohmaterials ausgewählt unter *Lamiaceae* und *Vitaceae* ist relativ zu der Verfügbarkeit phenolischer Verbindungen unbehandelter *Lamiaceae* and *Vitaceae.*

11. Verfahren nach Anspruch 10, **dadurch gekennzeichnet, dass** es ein Verfahren zur Steigerung der Verfügbarkeit phenolischer Verbindungen eines Pflanzen-Rohmaterials ausgewählt aus der Gruppe bestehend aus *Melissa sp., Rosmarinus sp., Thymus sp.* und *Vitis sp.* ist relativ zu der Verfügbarkeit phenolischer Verbindungen aus nichtbehandelten *Melissa sp., Rosmarinus sp., Thymus sp.* und *Vitis sp..*

12. Verfahren nach einem der Ansprüche 1 bis 11, wobei mindestens Schritt c), insbesondere mindestens Schritte b) und c), und insbesondere alle Schritte a), b), c), in einem verschlossenen Behältnis, vorzugsweise assoziiert mit einem Kondensationssystem durchgeführt werden.

**Claims**

1. A method for improving the availability of at least one active substance included in a plant raw material **characterized in that** it comprises at least the following steps, in this order:

    a) having at least one plant raw material;
    b) carrying out an impregnation step by bringing said plant raw material into contact with a polar impregnation solvent for a period ranging from 1 hour to 2 days at a temperature ranging from 5 ° C to the boiling point of the polar impregnation solvent; said polar impregnation solvent being selected from the group formed by water and the solvents comprising or consisting of water and at least one C1-C5 alcohol;
    c) proceed with partial evaporation of the polar impregnation solvent until a product is obtained comprising from 5 to 50%, by weight of impregnation solvent relative to the total weight of the product obtained;

    said method being such that step c) of evaporating the polar impregnation solvent is carried out directly on the entire mixture resulting from step b) of impregnating the plant raw material with the polar solvent;
    said plant raw material being selected from the group consisting of *Theaceae, Rosaceae, Lamiaceae, Vitaceae, Fabaceae and Lauraceae* and in particular *Camellia sp., Quillaja sp, Rosmarinus sp., Melissa sp., Thymus sp.,* and *Vitis sp.,* preferably said plant raw material being in ground form, more preferably in powder form;
wherein the active substance being selected from the group consisting of saponins and phenolic compounds.

2.  The method according to claim 1 wherein the impregnation step b) and/or the evaporation step c) is carried out at atmospheric pressure.

3.  The method according to claim 2 wherein impregnation step b) and evaporation step c) are carried out at atmospheric pressure.

4.  The method according to any one of Claims 1 to 3, wherein at least part of step b) of impregnating the plant raw material with the polar impregnation solvent is a step selected from the group consisting of decoctions, macerations and infusions.

5.  The method according to any one of Claims 1 to 4, wherein at least part of the step b) of impregnating the plant raw material with the polar impregnation solvent is carried out in the presence of ultrasound.

6.  The method according to any one of Claims 1 to 5, wherein the polar impregnation solvent comprises or consists of water and from 0 to 80% by weight of ethanol based on the total weight of the solvent.

7.  The method according to any one of Claims 1 to 6, wherein at least part of step b) of impregnating the plant raw material with the polar impregnation solvent is a step of macerating the plant raw material with a polar impregnation solvent comprising or consisting of water and from 5 to 80% by weight of ethanol based on the total weight of the solvent, preferably at least part of said maceration step being carried out in the presence of ultrasound .

8.  The method according to any one of Claims 1 to 7, **characterized in that** it is a method for improving the availability of saponins of a plant raw material selected from *Theaceae* and *Rosaceae* relative to the availability of saponins of untreated *Theaceae* and *Rosaceae.*

9.  The method according to claim 8 **characterized in that** it is a method for improving the availability of saponins of a plant raw material of the *Camellia oleifera* type relative to the availability of saponins of a plant raw material of an untreated plant raw material of *Camellia oleifera* type.

10. The method according to any one of Claims 1 to 7, **characterized in that** it is a method for improving the availability of phenolic compounds of a plant raw material selected from *Lamiaceae* and *Vitaceae* relative to the availability of phenolic compounds of untreateed *Lamiaceae* and *Vitaceae.*

11. The method according to Claim 10, **characterized in that** it is a process for improving the availability of the phenolic compounds of a plant raw material selected from the group consisting of *Melissa sp., Rosmarinus sp., Thymus sp.* and *Vitis sp.* relative to the availability of phenolic compounds from untreated *Melissa sp., Rosmarinus sp., Thymus sp. and Vitis sp..*

12. The method according to any one of Claims 1 to 11, wherein at least step c), in particular at least steps b) and c), and in particular all of steps a), b), c), is carried out in a closed enclosure, preferably associated with a condensation system.

Evacuation des vapeurs de
solvant d'imprégnation

Système de
refroidissement

Cuve d'imprégnation

Evacuation du condensat
de solvant d'imprégnation

Matière première
+
solvant d'imprégnation

Cuve de collecte du
condensat de solvant
d'imprégnation pour
l'étape de séchage

Système de
chauffage pour
l'étape de séchage

Système d'agitation mécanique

Générateur
d'ultrasons

FIGURE 1

Matière première végétale
*Camellia oleifera* et
*Camellia oleifera* issu dudit
procédé selon l'invention

Dichlorométhane

Méthanol

Eau

Extraction sous pression : 50°C, 100 Bars

**Rendement DCM (%)**

3,3

3,2

**Rendement MeOH (%)**

20,1

19,2

**Rendement eau (%)**

4,9

3,8

Matière première
végétale

*Camellia oleifera*
issu du procédé
selon l'invention

FIGURE 2

FIGURE 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9718283 A
- EP 2080436 A2

- US 2315983 A


**Littérature non-brevet citée dans la description**

- **XIA, E.-Q. ; DENG, G.-F. ; GUO, Y.-J. ; LI, H.-B.** Biological Activities of Polyphenols from Grapes. *Int J Mol Sci,* 2010, vol. 11, 622-646
- **MIRAJ, S. ; RAFIEIAN-KOPAEI, KIANI, S.** Melissa officinalis L: A Review Study With an Antioxidant Prospective. *J Evid Based Complementary Altern Med,* 2017, vol. 22, 385-394
- **ENGLER PAUL ; FLEURY ROSELYNE ; MARCELOT NATHALIE ; CHICOTEAU PIERRE.** Impacts d'une supplémentation en antioxydants dans l'eau de boisson chez le poulet de chair. *JRA2017,* 2017
- **EID, Y. Z.** Dietary Grape Pomace Affects Lipid Peroxidation and Antioxidative Status in Rabbit Semen. *World Rabbit Science,* 2010, vol. 16 (3), 157-64
- **OLAH ; NELI-KINGA ; GYONGYI OSSER ; CÂMPEAN RAMONA FLAVIA ; FLAVIA ROXANA FURTUNA ; DANIELA BENEDEC ; FILIP LORENA ; OANA RAITA ; DANIELA HANGANU.** The Study of Polyphenolic Compounds Profile of Some Rosmarinus Officinalis L. Extracts. *Pakistan Journal of Pharmaceutical Sciences,* 2016, vol. 29, 2355-61
- **ZOFIA ZABOROWSKA ; KRZYSZTOF PRZYGOŃSKI ; AGNIESZKA BILSKA.** Antioxidative effect of thyme (Thymus vulgaris) in sunflower oil. *Acta Sci. Pol., Technol. Aliment.,* 2012, vol. 11 (3), 283-291
- **PATRA, A. K. ; J. SAXENA.** The Effect and Mode of Action of Saponins on the Microbial Populations and Fermentation in the Rumen and Ruminant Production. *Nutrition Research Reviews,* 2009, vol. 22 (2), 204-19

- **RAMOS-MORALES, EVA ; GABRIEL DE LA FUENTE ; STEPHANE DUVAL ; CHRISTOF WEHRLI ; MARC BOUILLON ; MARTINA LAHMANN ; DAVID PRESKETT ; RADEK BRAGANCA ; CHARLES J. NEWBOLD.** Antiprotozoal Effect of Saponins in the Rumen Can Be Enhanced by Chemical Modifications in Their Structure. *Frontiers in Microbiology,* 2017, vol. 8
- **WINA ; ELIZABETH ; STEFAN MUETZEL ; KLAUS BECKER.** The Impact of Saponins or Saponin-Containing Plant Materials on Ruminant Production--a Review. *Journal ofAgricultural and Food Chemistry,* 2005, vol. 53 (21), 8093-8105
- **BUDAN ALEXANDRE.** Caractérisation phytochimique et activités biologiques d'extraits végétaux riches en saponines, Etude in vitro de leur capacité à orienter le métabolisme ruminal. *Ecole doctorale VENAM, Université d'Angers,* 2013
- **BAÑO ; MARIA JOSÉ DEL ; JUAN LORENTE ; JULIAN CASTILLO ; OBDULIO BENAVENTE-GARCIA ; JOSÉ ANTONIO DEL RÍO ; ANA ORTUÑO ; KARL-WERNER QUIRIN ; DIETER GERARD.** Phenolic Diterpenes, Flavones, and Rosmarinic Acid Distribution during the Development of Leaves, Flowers, Stems, and Roots of Rosmarinus Officinalis. Antioxidant Activity. *Journal ofAgricultural and Food Chemistry,* 2003, vol. 51 (15), 4247-53
- **RIBEREAU-GAYON P.** Le dosage des composés phénoliques totaux dans les vins rouges. *Chimie Analytique,* 1970, vol. 52 (6), 627-631